# EUROPÄISCHE PATENTSCHRIFT

(11) **EP 3 558 542 B1**
(45) Veröffentlichungstag und Bekanntmachung des Hinweises auf die Patenterteilung: **19.06.2024**
(21) Anmeldenummer: 17842416.4
(22) Anmeldetag: 21.12.2017
(51) Int. Cl.: B04B 7/00, B04B 7/02, B04B 11/02, B04B 15/08, B29B 17/02, C08J 11/08, B04B 7/06

(54) **GASDICHTE ZENTRIFUGE ZUR FESTSTOFFABTRENNUNG AUS EINER POLYMERLÖSUNG SOWIE VERFAHREN ZUR FESTSTOFFABTRENNUNG AUS EINER POLYMERLÖSUNG**
GAS-TIGHT CENTRIFUGE FOR SEPARATING SOLIDS FROM A POLYMER SOLUTION, AND METHOD FOR SEPARATING SOLIDS FROM A POLYMER SOLUTION
CENTRIFUGEUSE ÉTANCHE AUX GAZ POUR SÉPARER DES SOLIDES D'UNE SOLUTION POLYMÈRE ET PROCÉDÉ POUR SÉPARER DES SOLIDES D'UNE SOLUTION POLYMÈRE

(30) Priorität: 21.12.2016 DE 102016015197
(43) Veröffentlichungstag der Anmeldung: 30.10.2019
(73) Patentinhaber: APK AG, 06217 Merseburg (DE)
(72) Erfinder: WOHNIG, Klaus, 14052 Berlin (DE); KAINA, Mike, 14532 Kleinmachnow (DE); FLEIG, Michael, 39307 Genthin (DE); JESCHKE, Janine, 06217 Merseburg (DE)
(74) Vertreter: Kilger, Ute
(86) Internationale Anmeldenummer: PCT/EP2017/001439
(87) Internationale Veröffentlichungsnummer: WO 2018/114046

(56) Entgegenhaltungen:
- EP-A2- 0 359 106
- WO-A1-93/16808
- WO-A1-2006/051116

## Beschreibung

### Gebiet der Erfindung

Die Erfindung betrifft eine Zentrifuge zur Abtrennung wenigstens eines Feststoffs aus einer den Feststoff und eine Polymerlösung mit zumindest einem Lösungsmittel und mindestens einem darin gelösten Kunststoff enthaltenden Suspension, insbesondere Abfallsuspension, mit den Merkmalen im Obergriff von Anspruch 1. Weiterhin betrifft die Erfindung ein Verfahren zum Abtrennen wenigstens eines Feststoffs aus einer den Feststoff und eine Polymerlösung mit zumindest einem Lösungsmittel und mindestens einem darin gelösten Kunststoff enthaltenden Suspension, wie etwa Abfallsuspension, mit einer Zentrifuge nach den Merkmalen von Anspruch 10 sowie die Verwendung einer solchen Zentrifuge in einer Abfall-Trennanlage gemäß den Merkmalen von Anspruch 15.

### Technologischer Hintergrund

Insbesondere in den Industrienationen fordert der nationale wie auch grenzüberschreitende Warenverkehr eine in zunehmendem Maße nachhaltige Rohstoffwirtschaft. Um die Menge an letztlich zu deponierenden Abfällen möglichst gering zu halten, sollen dem Warenkreislauf zugeführte Güter und Waren am Ende ihres Lebenszyklus daher zunehmend recycelt werden. Dies verlangt eine zumindest grobe Vorsortierung, um die tatsächlich wiederverwertbaren Anteile einem geeigneten Recyclingprozess zuführen zu können.

Bereits etablierte Möglichkeiten wie etwa die direkte Abgabe von Wertstoffen an eingerichteten Sammelstellen (Wertstoffhöfe) werden beispielsweise in Deutschland durch eine haushaltsnahe Sammlung und Entsorgung des häuslich vorsortierten Abfalls ergänzt (Mülltrennung). Grundlage hierfür bildet das sogenannte "Duale-System", bei dem spezielle Bestandteile - wie etwa solche aus Papier und/oder Kunststoff - durch den Verbraucher selbst getrennt erfasst und vom übrigen Restmüll separiert dem kommunalen Abfallunternehmen zur Abholung bereitgestellt werden. Dies kann beispielsweise über eigens hierfür im Außenbereich aufgestellte Behälter oder durch dem einzelnen Haushalt bereitgestellte Säcke erfolgen.

Dem zumindest grob vorsortierten Abfall einerseits steht andererseits die gezielte Abtrennung und Verarbeitung der darin enthaltenen Wertstoffe gegenüber. Hierbei stellen insbesondere solche Teile besondere Herausforderungen dar, welche eine oder gar mehrere Verbindungen unterschiedlicher Materialien aufweisen. Üblicherweise werden die zu recycelnden Abfälle einer zunächst groben Zerstückelung zugeführt, um eine möglichst einfache Handhabung und insbesondere effektive Verarbeitung in Abfall-Trennanlagen zu ermöglichen. Basierend auf der Art des Abfalls weist das dann vorliegende Schredder-Granulat flächige und/oder demgegenüber räumliche Strukturen auf, so dass zwischen sogenannten 2D- (flächig) und entsprechenden 3D-Materialien (räumlich) unterschieden wird.

Am Beispiel von Verkaufsverpackungen erläutert kann es sich bei dem zu verarbeitenden Abfall beispielsweise um Folienbeutel oder Getränkekartons handeln, von denen letztere allgemein auch unter dem Gattungsnamen "Tetra Pak^{®}" bekannt sind. Derartige Verpackungen weisen eine mehrschichtige Verbundkonstruktion auf, welche beispielsweise einzelne Lagen aus Papier und/oder Aluminium und Kunststoff umfassen. Aufgrund ihrer als Schredder-Granulat im Wesentlichen flächigen Form gelten derartige Verpackungen als 2D-Materialien. Demgegenüber sind beispielsweise recycelbare Geräte wie etwa Computertastaturen und Bildschirme oder auch Kraftfahrzeugteile wie Verkleidungen und Armaturenbretter bereits aufgrund ihres auch nach dem mechanischen Zerkleinern noch vorliegenden Volumens den 3D-Materialien zugehörig.

Unabhängig von der Form der zu verarbeitenden Abfälle bedarf es am Prozessende einer möglichst verunreinigungsarmen oder gar sortenreinen Abtrennung und Rückgewinnung der wiederverwertbaren Bestandteile aus Materialverbindungen, um im Sinne eines stofflichen Recyclings erneut Verwendung zu finden. Im Stand der Technik sind hierzu Verfahren bekannt, welche auf der Erwärmung von Verbundwerkstoffe aufweisendem Abfall basieren. Hierdurch sind insbesondere die darin enthaltenen thermoplastischen Kunststoffe von den übrigen Bestandteilen abtrennbar, indem diese aufgeschmolzen und die in der Kunststoffschmelze enthaltenen übrigen Beimengungen durch geeignete Filtereinrichtungen ausgesiebt werden. Bei den Kunststoffen handelt es sich häufig um ein- oder mehrschichtige Folien aus Polyamid (PA) und/oder Polyethylen (PE) und/oder Polypropylen (PP).

Aus der DE 44 14 750 A1 ist hierzu ein Verfahren sowie eine Vorrichtung bekannt, um beispielsweise mit Papier verunreinigte viskose Kunststoffschmelzen von diesem zu trennen. Hierin wird die Verwendung eines Trennaggregats aufgezeigt, welches eine Zentrifuge umfasst. Die sich beim Zentrifugieren durch die Zentrifugalkräfte an der Innenwand der Zentrifuge absetzenden Feststoffe werden dabei über eine Bandschnecke erfasst und zu einer Abführeinrichtung gefördert.

Die DE 198 18 183 C2 offenbart eine alternative Ausgestaltung für ein Trennaggregat, welches einen aufheizbaren Rotor und eine im Bereich des Außenumfangs des Rotors angeordnete Aufnahmevorrichtung umfasst. Dabei ist die Aufnahmevorrichtung aus einem den Außenumfang des Rotors zumindest teilweise umschlingenden Band gebildet. Innerhalb des Rotors können so mindestens zwei Plastiksubstanzen unterschiedlicher Erweichungstemperatur enthaltene Abfälle eingefüllt und erwärmt werden. Bei Erreichen der niedrigeren Erweichungstemperatur einer der Plastiksubstanzen wird diese durch eine Rotation des Rotors auf den im Bereich des Rotorumfangs angeordneten Bandabschnitt herauszentrifugiert. In einem sich daran anschließenden Vorgang mit entsprechend höherer Temperierung kann dann die zweite Plastiksubstanz auf gleiche Weise herauszentrifugiert werden.

Eine weitere Möglichkeit beschreibt die DE 43 43 784 A1, welche den Einsatz eines Lösungsmittels in Form von Ameisensäure vorschlägt. Das Lösungsmittel ist dazu vorgesehen, in Abfällen enthaltenes Polyamid aus diesem herauszulösen. Hierzu werden die Abfälle in eine bewegliche Siebtrommel überführt, welche in einem mit dem Lösungsmittel befüllten Behälter rotierbar angeordnet ist. Innerhalb der Siebtrommel angeordnete Leisten wirken dabei mechanisch auf die Abfälle ein, um eine verbesserte Trennung einzelner Bestandteile zu erreichen. Der Behälter ist an ein Leitungssystem angeschlossen, so dass das Lösungsmittel mittels einer Pumpe im Kreislauf geführt werden kann. Die Abtrennung der übrigen Bestandteile erfolgt durch Filter, Dekanter oder Zentrifugen, wobei das gelöste Polyamid durch ein geeignetes Fällmittel wie etwa Wasser ausgefällt wird. Die anschließende Trennung des aus der Ameisensäure und dem Fällmittel bestehenden Filtrats erfolgt letztlich destillativ, adsorptiv oder durch Kristallation. Das so gewonnene Polyamid-Pulver kann anschließend getrocknet und beispielsweise zu technischen Fasern oder Regenerat wiederaufgearbeitet werden.

Die Dokumente EP 0359106 A2 sowie WO 93/16808 A1 offenbaren ebenfalls eine Zentrifuge, welche zur Abtrennung wenigstens eines Feststoffs aus einer Suspension geeignet ist. Die offenbarten Zentrifugen sehen jedoch keine Inertisierung und Manipulation des Innendrucks vor.

Mit den bisher bekannten Verfahren und Vorrichtungen ist eine Durchführung des insbesondere im Zeichen des Umweltschutzes stehenden Recyclings von Wertstoffen durchführbar. Dabei verwendete Lösungsmittel weisen gegenüber einer reinen Erhitzung den Vorteil auf, dass die jeweiligen Kunststoffanteile möglichst vollständig aus dem zu behandelnden Abfall herausgelöst werden können. Allerdings sind rein mit Wärme arbeitende Trennaggregate mit Zentrifugen mitunter nicht immer dazu geeignet, um sämtliche Feststoffe aus den dann vorliegenden viskosen Schmelzen herauszutrennen. Dies gilt insbesondere für solche Feststoffe mit einer gegenüber der jeweiligen Emulsion bzw. Lösung geringeren Dichte, wie beispielsweise Kork. Zudem verlangen derartige Systeme eine mitunter lange Zeitdauer, um den abzutrennenden Kunststoff bis auf seine Erweichungstemperatur zu erwärmen. Auch ist nicht auszuschließen, dass der Abfall weitere Bestandteile mit einer unterhalb oder gleichen Erweichungstemperatur wie der herauszulösende Kunststoff enthält, so dass eine gezielte Abtrennung von quasi reinem Kunststoff oder beispielsweise reinem Polyethylen (PE) oder Polyamid (PA) erschwert oder gar unmöglich ist. Aufgrund der dann enthaltenen Verunreinigungen und/oder Kunststoffmischungen sind insofern weitergehende Maßnahmen notwendig, um eine ausreichende Trennung der zu recycelnden Stoffe zu gewährleisten.

Demgegenüber geht der Einsatz von zumeist leicht- oder gar hochentzündlichen Lösungsmitteln insbesondere im großtechnischen Einsatz mit einer entsprechend erhöhten Gefährdung einher. Um eine möglichst geringe Ausgasung der Lösungsmittel aus dem Filtrat zu gewährleisten, ist - trotz der mitunter bei zunehmender Temperatur steigerbaren Reaktionsfreudigkeit des Lösungsmittels - dessen Höchsttemperatur nach oben hin zu begrenzen. Hierfür vorliegende Sicherheitsbestimmungen können eine Betriebszulassung für derartige Anlagen durchaus verhindern. Insbesondere der Einsatz rotierender Vorrichtungen wie etwa einer Zentrifuge begünstigt zudem den Übergang des Lösungsmittels in einen gasförmigen Zustand. Vor diesem Hintergrund bieten die derzeit bekannten Vorrichtungen und Verfahren zur Durchführung des großtechnischen Recyclings von Kunststoff enthaltenden Abfällen daher auch weiterhin noch Raum für Verbesserungen.

### Zusammenfassung der Erfindung

Davon ausgehend liegt der Erfindung die Aufgabe zugrunde, eine wie zuvor aufgezeigte Zentrifuge sowie ein Verfahren zur Abtrennung wenigstens eines Feststoffs aus einer den Feststoff und eine Polymerlösung mit zumindest einem Lösungsmittel und mindestens einem darin gelösten Kunststoff enthaltenden Suspension mittels einer Zentrifuge insbesondere für einen großtechnischen Einsatz in einer Abfall-Trennanlage dahingehend weiterzuentwickeln, dass ein hoher Durchsatz zur Feststoffabtrennung aus der Suspension heraus bei gleichzeitig ausreichender Sicherheit gewährleistet ist.

Die Lösung dieser Aufgabe besteht nach der Erfindung in einer Zentrifuge mit den Merkmalen von Anspruch 1 sowie in einem Verfahren zur Feststoffabtrennung mit einer Zentrifuge nach den Merkmalen von Anspruch 10 und der Verwendung einer solchen Zentrifuge gemäß den Merkmalen von Anspruch 15. Weitere Einzelheiten, Merkmale und Vorteile der Gegenstände der Erfindung ergeben sich aus den jeweils abhängigen Unteransprüchen.

Dabei geht die Erfindung von einem vorherigen Ansetzen der zu zentrifugierenden Suspension aus, indem zunächst Kunststoff aufweisender Feststoff, beispielsweise Abfall, wenigstens einem Lösungsmittel zugeführt wird. Dies kann beispielsweise in geeigneten Becken oder Behältern erfolgen. Das wenigstens eine Lösungsmittel ist dabei so eingestellt, dass mindestens ein Kunststoff von dem Feststoff abgetrennt wird, indem der Kunststoff zumindest teilweise innerhalb des Lösungsmittels in Lösung geht. Erst sobald der Kunststoff, oder bei vorhandensein mehrerer Kunststoffe wenigstens einer von diesen oder alle, zumindest teilweise in Lösung gegangen ist, wird dieser in die Zentrifuge überführt. Diese Überführung kann bevorzugt kontinuierlich erfolgen.

Hierzu schlägt die Erfindung einen geschlossenen Aufbau für die Zentrifuge vor, bei dem diese ein gasdichtes Gehäuse aufweist, innerhalb dem ein Dreheinsatz rotierbar gelagert ist. Bei dem Dreheinsatz kann es sich beispielsweise um eine hohlzylindrische Ausgestaltung wie etwa eine Trommel handeln, welche um ihre Längsachse herum rotierbar ist (Siebzentrifuge). Alternative Ausgestaltungen können beispielsweise wenigstens einen Schleuderteller vorsehen. Aufgrund der gasdichten Ausgestaltung der Zentrifuge ist es möglich, die Suspension aus Zentrifugiergut zusammen mit dem Lösungsmittel gasdicht innerhalb des den Dreheinsatz umschließenden Gehäuses zu zentrifugieren, um eine überaus zeitnahe und sichere sowie ergiebige Abtrennung des Feststoffs von der Lösungsmittel und darin gelösten Kunststoff umfassenden Polymerlösung zu erreichen.

Der Erfindung liegt dabei die Erkenntnis zugrunde, dass der gasdichte Aufbau der Zentrifuge einen sicheren Umgang auch mit wenigstens einem leicht- oder gar hochentzündlichen Lösungsmittel ermöglicht, da durch das quasi verkapselte Zentrifugieren des Zentrifugierguts eine Entzündung etwaiger Lösungsmitteldämpfe ausgeschlossen ist. Hierdurch ist nunmehr der vorteilhafte Einsatz von Lösungsmitteln zur Abtrennung von Kunststoff mit dem vorteilhaften Auszentrifugieren der übrigen Feststoffe prozesssicher kombinierbar. So kann der Kunststoff innerhalb kürzester Zeit in Lösung gehen, während der oder die übrigen Feststoffe aufgrund ihrer Massenträgheit mittels Zentrifugieren von dem den gelösten Kunststoff enthaltenden Lösungsmittel (Polymerlösung) kontrolliert entfernbar sind. Die Konsistenz der Polymerlösung kann dabei so eingestellt sein, dass diese eine möglichst geringe Viskosität besitzt. Auf diese Weise kann der gelöste Kunststoff - anders als bei seiner Abtrennung durch reines Erhitzen - auch ohne nennenswerten Widerstand durch das restliche Zentrifugiergut hindurch von diesem abgetrennt werden.

Aufgrund der aus dem geschlossenen Gehäuse der Zentrifuge resultierenden erfindungsgemäßen Gasdichtheit kann nunmehr auch trotz hoher Sicherheitsanforderungen ein großtechnischer Einsatz mit Lösungsmittel durchgeführt werden, welcher einen hohen Durchsatz an Zentrifugiergut ermöglicht. Gegenüber mit zum Teil hohen Temperaturen betriebenen Zentrifugen ergibt sich ferner der Vorteil eines überaus wirtschaftlichen und wartungsarmen Betriebs.

Nach einer vorteilhaften Weiterbildung des grundsätzlichen Erfindungsgedanken kann das Gehäuse einen Einlauf sowie einen Auslauf besitzen. Diese können dazu vorgesehen sein, Lösungsmittel und/oder Lösungsmittel und darin gelösten Kunststoff enthaltene Polymerlösung mitsamt dem darin enthaltenen Feststoff als Suspension in das Gehäuse einzuleiten sowie Polymerlösung und/oder auszentrifugierten Feststoff auszuleiten. Hiernach wären in Bezug auf das Gehäuse der Zentrifuge der Einlauf beispielsweise für die Einleitung von Suspension und der wenigstens eine Auslauf für die Ausleitung von Feststoff und/oder Lösungsmittel und gelösten Kunststoff enthaltener Polymerlösung vorgesehen. Bevorzugt können wenigstens zwei Ausläufe vorgesehen sein, so dass Feststoff und Polymerlösung getrennt voneinander ausleitbar sind.

Die Erfindung sieht vor, dass der innerhalb des gasdichten Gehäuses angeordnete Dreheinsatz zumindest zeitweise mit Lösungsmittel und/oder einer Polymerlösung aus Lösungsmittel und bereits darin gelöstem Kunststoff durchströmbar ist. So kann die Zentrifuge für eine kontinuierliche Durchströmung ausgelegt sein, um bereits gelösten Kunststoff beispielsweise direkt aus dieser heraus auszuleiten. Auch kann die Lösung im Sinne eines Kreislaufes permanent durch die Zentrifuge und/oder dieser vorgelagerte Stationen hindurch strömen, bis ein erwünschtes Maß an darin gelöstem Kunststoff erreicht wird. Alternativ oder in Ergänzung hierzu können/kann das Lösungsmittel und/oder die Lösung eine Zeit lang innerhalb der Zentrifuge verbleiben, wobei dessen insbesondere kreisende Bewegung allein aus der Rotation des Drehkörpers her resultiert. Die Zentrifuge ist in besonders bevorzugter Weise so ausgelegt, dass diese kontinuierlich durchströmbar ist. In vorteilhafter Weise ist der Dreheinsatz dabei so ausgebildet, dass dieser sich während des Abtrennprozesses in kontinuierlicher Rotation befindet.

Gemäß einer Ausgestaltung der Erfindung kann der innerhalb des gasdichten Gehäuses angeordnete Dreheinsatz eine den Zentrifugiergutraum zumindest umfangsseitig begrenzende Mantelfläche aufweisen, welche wenigstens bereichsweise mit Durchgangsöffnungen ausgestattet ist. "Durchgangsöffnungen" meint hierbei durch die Mantelfläche hindurch reichende Öffnungen beispielsweise in Form von Löchern, so dass sich eine gewünschte Durchlässigkeit des Dreheinsatzes in radialer Dichtung durch seine Mantelfläche hindurch ergibt. Selbstverständlich können die Durchgangsöffnungen auch dergestalt sein, dass der Dreheinsatz zumindest bereichsweise in Form eines durchlässigen Korbes ausgebildet ist, wobei die Durchgangsöffnungen sich dann zwangsläufig aus den dann bereits konstruktiv vorliegenden freien Flächen zwischen den Strukturteilen des Korbes ergeben. Je nach Ausgestaltung der Durchgangsöffnungen könne diese einen Filter bilden, um den oder die übrigen Feststoffe des Zentrifugierguts innerhalb des Zentrifugiergutraums zurückzuhalten, während das Lösungsmittel bzw. die bereits gelösten Kunststoff enthaltene Polymerlösung durch die Durchgangsöffnungen hindurch gelangt. Auch kann die Zentrifuge so ausgestaltet sein, dass dann die Durchgangsöffnungen des Dreheinsatzes vom Zentrifugiergutraum aus mit Lösungsmittel und/oder Polymerlösung durchströmbar sind.

Gegenüber Dekanter ergibt sich hierbei der Vorteil einer Durchlässigkeit für das Lösungsmittel und/oder die Polymerlösung, was insbesondere einen kontinuierlichen Abtrennprozess ermöglicht.

Je nach verwendetem Lösungsmittel bzw. vorhandenem Kunststoff können so der oder bei Vorhandensein mehrerer Kunststoffe wenigstens einige oder alle Kunststoffe in Lösung gehen. Sofern Kunststoffe ungelöst an dem Feststoff oder von diesem abgelöst zurückbleiben, werden diese zusammen mit dem aus nicht-Kunststoff bestehenden Feststoff oder aber als Feststoff selbst (ungelöst) auszentrifugiert. Auf diese Weise kann gezielt ein einzelner Kunststoff von dem Zentrifugiergut abgelöst werden und in Lösung gehen, so dass verbleinender Kunststoff zusammen mit anderem Feststoff beispielsweise erst in einem weiteren Schritt in Kombination mit wenigstens einem anderen Lösungsmittel in Lösung geht. Alternativ kann bei aus nur-Kunststoffen bestehenden Feststoffen gezielt ein oder mehrere Kunststoff gelöst werden, während ein oder mehrere andere Kunststoffe als Feststoff auszentrifugierbar sind.

Die Zentrifuge weist eine Inertisierungs-Einrichtung auf oder ist mit einer solchen verbunden. Unter einer solchen Einrichtung wird ein Mittel verstanden, mit dem beispielsweise ein Inertgas in das Gehäuse der Zentrifuge einleitbar ist. Auf diese Weise kann die Inertisierungs-Einrichtung dazu ausgebildet und angeordnet sein, einen Anteil an Sauerstoff innerhalb des Gehäuses zumindest teilweise oder gar vollständig aus diesem heraus zu verdrängen. Der Vorteil dieser Einrichtung liegt in der Möglichkeit zur Reduzierung eines Gehalts an Sauerstoff innerhalb des Gehäuses der Zentrifuge, wodurch sich der sichere Betrieb der Zentrifuge auf ein Maximum erhöhen lässt. Hier sind es insbesondere etwaige aus dem Lösungsmittel heraus in den gasförmigen Zustand übergehende Lösungsmitteldämpfe, welche erst in Kombination mit Sauerstoff ihre dann brennbaren und entzündlichen Eigenschaften entfalten. Durch die Herabsetzung oder gar vollständige Verdrängung von Sauerstoff kann eine sich daraus ergebende Gefährdung auf ein Minimum reduziert bis ausgeschlossen werden.

Die Inertisierungs-Einrichtung wird dazu genutzt, einen Innendruck zumindest innerhalb des Gehäuses der Zentrifuge zu erhöhen. Hiernach kann die Inertisierungs-Einrichtung derart ausgebildet sein, dass diese beispielsweise Inertgas mit einem oberhalb des Atmosphärendrucks liegenden Druck beaufschlagen und einleiten kann. Auf diese Weise ist es in überaus vorteilhafter Weise möglich, die Suspension auf eine oberhalb des Siedepunkts des oder der verwendeten Lösungsmittel zu erhitzen, um beispielsweise dessen Reaktionsfreudigkeit hinsichtlich des Lösens von Kunststoff zu erhöhen. Sofern der Innendruck durch die Inertisierungs-Einrichtung mindestens auf einen Wert für einen Dampfdruck des oder der Lösungsmittel erhöht wird, ist dessen Sieden ausgeschlossen. Auf diese Weise kann die Inertisierungs-Einrichtung gezielt dazu genutzt werden, den Wechsel des Aggregatzustandes des wenigstens einen Lösungsmittels trotz Überhitzung von flüssig zu gasförmig zu regeln und insbesondere zu unterbinden. Bevorzugt kann der Innendruck dabei auf einen Wert oberhalb des Dampfdrucks des wenigstens einen Lösungsmittels erhöht sein, so dass eine prozesssichere Beherrschung gegeben ist.

Gemäß einer vorteilhaften Weiterbildung kann die erfindungsgemäße Zentrifuge so ausgebildet sein, dass deren Dreheinsatz mit dem Einlauf des Gehäuses fluidleitend verbunden ist. Hierzu ist vorgesehen, dass der Dreheinsatz beispielsweise eine stirnseitige Öffnung besitzt, welche mit dem Einlauf des Gehäuses korrespondiert. Auf diese Weise kann Lösungsmittel und/oder Polymerlösung durch den Einlauf hindurch direkt in den Dreheinsatz und damit in dessen Zentrifugiergutraum gelangen.

In gleicher Weise kann der Dreheinsatz mit dem einen Auslass oder bei Anordnung von beispielsweise zwei Auslässen mit wenigstens einem dieser Auslässe des Gehäuses fluidleitend verbunden sein. Diese Verbindung kann alternativ oder in Kombination mit der Verbindung zwischen Einlass und Dreheinsatz etabliert sein. Insbesondere in Kombination besagter Verbindungen ergibt sich die Möglichkeit für einen direkten Ein- und Auslass an Lösungsmittel und/oder bereits gelösten Kunststoff und Lösungsmittel enthaltener Polymerlösung in und aus dem Dreheinsatz heraus. Hierdurch ist eine kontinuierliche Durchströmung des Dreheinsatzes realisierbar. Bei Realisierung nur einer der beiden Verbindungen kann der Weg des Lösungsmittels und/oder der Polymerlösung durch in der Mantelfläche des Dreheinsatzes angeordnete Durchgangsöffnungen erfolgen. Selbstverständlich ist auch eine Kombination der zuvor aufgezeigten Ausgestaltungsformen grundsätzlich denkbar.

Im Rahmen der Erfindung wird es als besonders vorteilhaft angesehen, wenn der Antrieb zur Rotation des Dreheinsatzes außerhalb des gasdichten Gehäuses angeordnet ist. Zwar kann dieser auch innerhalb des Gehäuses verbaut sein, allerdings sind dann weitergehende Ausgestaltungen hinsichtlich einer Abdichtung des Antriebes sowie dessen etwaigen Kühlung notwendig. Basierend auf der bevorzugten Auslagerung des Antriebs aus dem gasdichten Gehäuse der Zentrifuge heraus, kann der rotierbare Dreheinsatz beispielsweise mit einer antreibbaren Welle drehmomentübertragend gekoppelt sein. Besagte Welle kann dabei entweder direkt oder indirekt beispielsweise über ein Getriebe mit dem Antrieb und dem Dreheinsatz gekoppelt sein. Die Kopplung ist dann Drehmoment übertragend ausgebildet, so dass ein durch den Antrieb erzeugbares Drehmoment auf den Drehantrieb übertragbar ist. In diesem Zusammenhang wird vorgeschlagen, dass die Welle das gasdichte Gehäuse zumindest an einer Stelle durchdringt, wobei eben diese Stelle durch eine Dichtungsanordnung gasdicht abgedichtet ist. Auf diese Weise ist trotz der für die Welle notwendigen wenigstens einen Öffnung des Gehäuses dessen gasdichte Ausgestaltung weiterhin gewahrt.

Hinsichtlich der Ausgestaltung der hierzu erforderlichen Dichtungsanordnung sind diverse Bauformen und Funktionsprinzipien denkbar. Die Wahl der geeigneten Dichtungsanordnung obliegt dabei dem Fachmann, der auf Basis individueller baulicher und aus Belastungen resultierender Größenordnungen die jeweils passende Vorgabe treffen wird. Als mögliche Ausgestaltungen für eine derartige Dichtungsanordnung seien beispielhaft und insofern nicht begrenzend "Gleitringdichtung", "Radialwellendichtung" oder "Stopfbuchse" genannt. Auch kann die Dichtungsanordnung eine oder mehrere dieser und/oder weiterer dem Fachmann bekannter Ausführungen umfassen.

Mit Blick auf die notwendige Leerung der Zentrifuge hinsichtlich der durch Zentrifugieren anfallenden Feststoffe aus dem Zentrifugiergut ist eine kontinuierliche oder beispielsweise in bestimmten Zeitintervallen durchführbare oder auf dem Erreichen einer zuvor festgelegten Menge basierende Entnahme denkbar. In besonders bevorzugter Weise ist die erfindungsgemäße Zentrifuge für einen kontinuierlichen Betrieb und damit auch für eine unterbrechungsfreie und somit kontinuierliche zumindest teilweise Entleerung ausgebildet.

Nach einer vorteilhaften Weiterentwicklung der erfindungsgemäßen Zentrifuge kann diese hierzu mit einem weiteren, den oder die durch Zentrifugieren abgeschiedenen Feststoffe aufnehmenden Behälter gasdicht verbunden sein. Dies ist insofern auch relevant, als dass besagter Feststoff zumindest teilweise noch mit Lösungsmittel und/oder bereits gelösten Kunststoff enthaltenem Lösungsmittel in Form von polymerlösung benetzt und/oder durchtränkt sein kann, so dass sich bei dessen offenen Handhabung eine Gefährdung durch auftretende Lösungsmitteldämpfe ergeben könnte. Durch den mit dem Gehäuse verbundenen gasdichten Behälter ist es möglich, den oder die aus dem Zentrifugiergut abgetrennten Feststoffe quasi ohne Kontakt mit der umgebenden Atmosphäre in den Behälter zu überführen. Hierin kann der Feststoff dann beispielsweise durch kontrolliertes Abdampfen des sich verflüchtigenden Lösungsmittels und/oder die Zugabe wenigstens eines weiteren Mittels getrocknet werden. Selbstverständlich ist dabei auch eine Temperierung des Behälters denkbar, um vorteilhaften Einfluss auf den Trocknungsvorgang der auszentrifugierten Feststoffe zu nehmen. Alternativ oder in Ergänzung hierzu kann der Behälter auch dazu ausgebildet sein, die anfallenden Feststoffe zu sortieren und weiteren Einrichtungen zur Weiterbehandlung zuzuführen.

Für eine kontinuierliche zumindest teilweise Leerung des gasdichten Behälters sind verschiedene dem Fachmann bekannte Ausgestaltungen denkbar. So kann besagter Behälter wenigstens ein Rührwerk besitzen oder mit einem solchen gasdicht verbunden sein.

Im Zusammenhang mit der Anordnung eines die Feststoffe aufnehmenden gasdichten Behälters kann dieser bevorzugt dergestalt sein, dass der oder die darin überführten Feststoffe durch die Zugabe einer Flüssigkeit wie beispielsweise von Wasser (H₂O) resuspendierbar sind. Alternativ oder in Ergänzung hierzu kann dabei auch wenigstens ein Lösungsmittel Verwendung finden. "Resuspendierbarkeit" meint hierbei, dass die Feststoffe auf diese Weise wieder in ein heterogenes Stoffgemisch überführbar sind, welches sich beispielsweise aus dem Wasser und/oder einem weiteren Lösungsmittel und dem oder den darin verteilten Feststoffen zusammensetzt. Selbstverständlich kann die so einstellbare Suspension auch noch nicht auszuschließende Reste an vorherigem Lösungsmittel und/oder bereits gelösten Kunststoff enthaltenem Lösungsmittel (Polymerlösung) enthalten.

In besonders bevorzugter Weise ist grundsätzlich die Anordnung einer Schleuse denkbar, um den auszentrifugierten Feststoff durch diese hindurch aus dem gasdichten System heraus zu entnehmen. Als gasdichtes System werden die einzelnen Anordnungen für sich wie beispielsweise das gasdichte Gehäuse oder der gasdichte Behälter verstanden, welche selbstverständlich auch zusammen oder in Kombination mit weitergehenden Anlagenteile besagtes gasdichtes System bilden können. Die Entnahme über die Schleuse kann dabei kontinuierlich oder diskontinuierlich erfolgen. Auch eine Pumpe und/oder ein Trockner können vorhanden sein, um beispielsweise restliches Lösungsmittel und/oder Polymerlösung aus dem gasdichten Behälter zu entnehmen und/oder generell zu entfernen.

Die erfindungsgemäße Zentrifuge sieht die Anordnung eines Verdichters vor, welcher in oder an dem Gehäuse angeordnet ist. Selbstverständlich kann dieser alternativ auch von dem Gehäuse entfernt gelegen sein, von wo aus er dann entsprechend fluidleitend mit dem Gehäuse verbunden ist. Unter einem Verdichter wird vorliegend ein Mittel verstanden, mit welchem ein bestehender Druck entweder erhöht oder herabgesetzt werden kann. Insbesondere in der Zusammenwirkung mit dem Gehäuse der Zentrifuge ist es daher möglich, einen Innendruck innerhalb des Gehäuses auf eine vorteilhafte Weise zu manipulieren. Je nach Zusammensetzung des verwendeten Lösungsmittels kann es von Vorteil sein, den Innendruck des Gehäuses in einen Bereich hin zu verlagern, in dem die Wirkung des Lösungsmittels maximiert ist. Alternativ oder in Ergänzung hierzu ist denkbar, dass die lösenden Eigenschaften des Lösungsmittels über eine Veränderung des Innendrucks dahingehend einstellbar sind, dass in Abhängigkeit des Innendrucks beispielsweise nur einer von zwei oder gar mehr in dem Zentrifugiergut enthaltenen Kunststoffen in Lösung geht. Auf diese Weise ist eine gezielte Abtrennung und/oder eine maximale Abtrennbarkeit von Kunststoff aus dem Zentrifugiergut realisierbar.

Selbstverständlich ist auch denkbar, dass der Innendruck des Gehäuses ergänzend oder ausschließlich durch eine gezielte Temperierung, insbesondere Temperaturerhöhung, des Lösungsmittels und/oder des gelösten Kunststoff enthaltenden Lösungsmittels durchführbar ist.

Selbstverständlich bildet die zuvor bereits beschriebene Inertsierungs-Einrichtung besagten Verdichter oder ist mit einem solchen gekoppelt.

Die nunmehr vorgestellte erfindungsgemäße Zentrifuge ermöglicht einen überaus hohen Durchsatz bei der Abtrennung wenigstens eines Feststoffs aus einer Suspension, welche wenigstens den einen Feststoff sowie eine Polymerlösung mit zumindest einem Lösungsmittel und mindestens einem darin gelösten Kunststoff umfasst. Durch die Wahl eines bestimmten Lösungsmittels kann bei Vorhandensein von zwei oder gar mehrerer weiterer Kunststoffe der jeweilige Zielkunststoff gezielt abgetrennt werden, so dass etwaige unterschiedliche Kunststoffe sich beispielsweise erst in einem zweiten Schritt durch die Verwendung eines anderen Lösungsmittels oder mittels einer anderen Lösungsmittelkonzentration herauslösen lassen. Insbesondere die gasdichte Ausgestaltung des Gehäuses der Zentrifuge gewährleistet eine ausreichende Sicherheit, so dass eine problemlose Zulassung auch im großtechnischen Einsatz zu erwarten ist. Aufgrund der sich hieraus ergebenden Vorteile eignet sich die Zentrifuge in besonders vorteilhafter Weise zur Verarbeitung von Abfall im Sinne eines Receyclings.

Weiterhin ist die Erfindung auf ein Verfahren gerichtet, welches mittels einer Zentrifuge dem Abtrennen wenigstens eines Feststoffs aus Suspension, insbesondere einer Abfallsuspension, dient. Besonders bevorzugt kann es sich dabei um die zuvor aufgezeigte erfindungsgemäße Zentrifuge, so dass die Ausführungen hierzu auch für das erfindungsgemäße Verfahren entsprechend gelten. Die zu zentrifugierende Suspension beinhaltet dabei den wenigstens einen Feststoff sowie eine Polymerlösung, welche mindestens ein Lösungsmittel sowie zumindest einen darin bereits in Lösung gegangenen Kunststoff enthält.

Hierzu wird vorgeschlagen, dass das als besagte Suspension vorliegende Zentrifugiergut zentrifugiert wird, indem diese in einen Bereich eines rotierbaren Dreheinsatzes der Zentrifuge überführt wird. Der hierfür notwendige Aufbau sieht vor, dass die Zentrifuge ein den Dreheinsatz umschließendes entsprechend gasdicht ausgestaltetes Gehäuse umfasst, innerhalb dem das Zentrifugiergut insofern gasdicht zentrifugiert wird. Bei dem Dreheinsatz kann es sich beispielsweise um eine die Suspension zumindest teilweise aufnehmende, bevorzugt hohlzylindrische, Ausgestaltung handeln.

Die sich dabei insbesondere aus dem Zentrifugieren des Zentrifugierguts innerhalb des gasdichten Gehäuses der Zentrifuge ergebenden Vorteile wurden bereits zuvor im Zusammenhang mit der Vorstellung der erfindungsgemäßen Zentrifuge näher erläutert, so dass zur Vermeidung von Wiederholungen an dieser Stelle auf die entsprechenden Ausführungen hierzu verwiesen wird.

Nach einer vorteilhaften Weiterentwicklung des erfindungsgemäßen Verfahrens kann der Dreheinsatz dabei zumindest zeitweise mit Lösungsmittel und/oder gelösten Kunststoff enthaltendem Lösungsmittel (Polymerlösung) durchströmt werden. Aus der Strömung ergibt sich der Vorteil eines kontinuierlichen Ausgleichs und/oder einer gleichmäßigen Verteilung des im Lösungsmittel gelösten Kunststoffs. Sollte noch ungelöster Kunststoff innerhalb der Suspension vorhanden sein, erhöht sich hierdurch der Anteil an in Lösung gehendem Kunststoff, da eine lokale Sättigung der Lösung vermieden wird. Die Strömung ermöglicht in besonders vorteilhafter Weise einen kontinuierlichen Prozess, so dass die Polymerlösung quasi im Kreislauf geführt und kontinuierlich aus und/oder in das Gehäuse geleitet werden kann, um beispielsweise direkt im Anschluss ein Ablösen desgelösten Kunststoffs von dem Lösemittel vornehmen zu können.

Im Rahmen des erfindungsgemäßen Verfahrens wird es als vorteilhaft angesehen, wenn Lösungsmittel und/oder Polymerlösung den Dreheinsatz nicht oder nicht nur in dessen Längsrichtung durchläuft, sondern dessen den Zentrifugiergutraum begrenzende Mantelfläche durchströmt. Hierzu kann die, beispielsweise hohlzylidrische, Mantelfläche wenigstens bereichsweise mit Durchgangsöffnungen ausgestattet sein, welche dann vom Zentrifugiergutraum aus mit Lösungsmittel und/oder Polymerlösung durchströmt werden. Auf diese Weise wird der Kontakt mit dem sich aufgrund der Zentrifugalkräfte im Bereich der Mantelfläche ansammelnden Feststoff deutlich erhöht. Da der oder die Feststoffe mit der Zeit einen Feststoffkuchen mit zunehmender Dicke bilden können, wird so dessen weitere Durchdringung mit Lösungsmittel und/oder Polymerlösung sichergestellt. Auf diese Weise kann, neben dem Feststoff, ein Maximum an Kunststoff aus dem Zentrifugiergut abgetrennt werden.

Nach einer besonders bevorzugten weitergehenden Maßnahme kann der Anteil an Sauerstoff innerhalb des Gehäuses zumindest teilweise verdrängt bzw. herabgesetzt werden. Dies kann in vorteilhafter Weise durch das Einleiten von Inertgas erfolgen, in dessen Folge der innerhalb des Gehäuses enthaltene Sauerstoff in einem entsprechenden Maße verdrängt wird. Dies ermöglicht ein hohes Maß an Sicherheit für den Betrieb der Zentrifuge, da die sich innerhalb des Gehäuses ausbreitenden Lösungsmitteldämpfe mangels eines ausreichend vorliegenden Sauerstoffanteils keinen entzündlichen Zustand erreichen können. Durch das Einleiten von Inertgas kann der Innendruck im Gehäuse oder im gesamten gasdichten System in besonders vorteilhafter Weise so weit erhöht werden, dass dieser einen Wert für den Dampfdruck des verwendeten Lösungsmittels oder der verwendeten Lösungsmittel erreicht, besonders bevorzugt sogar übersteigt. Dies ermöglicht einen Betrieb, bei dem die Suspension in der Form überhitzt werden kann, ohne das das darin enthaltene wenigstens eine Lösungsmittel in den dampfförmigen Zustand wechselt. Dies kann nun dazu genutzt werden, um beispielsweise die Reaktionsfreudigkeit des Lösungsmittels hinsichtlich seiner lösenden Wirkung auf den wenigstens einen Kunststoff zu erhöhen und/oder gezielt nur einen von mehreren vorhandenen Kunststoffen zu lösen. In diesem Zusammehang kann das oder können die Lösungsmittel hinsichtlich ihrer lösenden Wirkung beispielsweise temperaturabhängig eingestellt sein, so dass das Lösen des Zielkunststoffs in Abhängigkeit der jeweils eingestellten Temperatur erfolgt.

Gemäß einer Weiterentwicklung des Verfahrens kann aus der Suspension abgetrennter Feststoff in einen mit dem Gehäuse verbundenen gasdichten Behälter überführt werden. Besagte Überführung der Feststoffe kann dabei zeitweise oder in besonders bevorzugter Weise kontinuierlich erfolgen. Dank des gasdichten Austausches des oder der auszentrifugierten Feststoffe aus der Zentrifuge heraus in besagten Behälter wird die Sicherheit nochmals erhöht, da so ein etwaiger Kontakt mit Luftsauerstoff vollständig vermieden wird.

Um eine erleichterte Weiterbehandlung der auszentrifugierten Feststoffe zu erreichen, sieht eine vorteilhafte Maßnahme die Zugabe eines geeigneten Mittels vor, um die in den gasdichten Behälter überführten Feststoffe innerhalb diesem zu resuspendieren. Bei dem dabei verwendeten Mittel kann es sich in besonders bevorzugter Weise um Wasser (H₂O) und/oder wenigstens ein weiteres Lösungsmittel handeln. Insbesondere bei der Verwendung von Wasser kann so etwaiges noch enthaltenes Lösungsmittel und/oder Polymerlösung hierdurch auf ein unkritisches Maß verdünnt werden, so dass eine sichere Weiterbehandlung auch in sich anschließenden offenen und insofern nicht-gasdicht ausführbaren Prozessen gewährleistet ist. Hierzu kann der gasdichte Behälter einen geeigneten Zulauf aufweisen, über welchen besagtes Mittel zur Resuspendierung entweder zeitweise oder kontinuierlich in den Behälter gelangt.

Eine besonders bevorzugte Maßnahme des weiterentwickelten erfindungsgemäßen Verfahrens sieht vor, dass der innerhalb des gasdichten Gehäuses der Zentrifuge oder im gesamten System vorliegende Innendruck in gezielter Weise manipuliert wird. Hierzu kann das Gehäuse beispielsweise mit einem entsprechenden Verdichter verbunden sein, mit welchem der Innendruck erhöht oder herabgesetzt wird. Ziel hierbei ist das Einstellen eines bestimmten Innendrucks, unter dem beispielsweise das wenigstens eine Lösungsmittel seine maximale Lösewirkung entfaltet und/oder nur beispielsweise einen von zwei oder mehr in dem Zentrifugiergut enthaltenen Kunststoffen löst. Damit kann eine gezielte Abtrennung und/oder eine maximale Abtrennbarkeit von Kunststoff aus dem Zentrifugiergut erreicht werden.

Selbstverständlich ist auch denkbar, dass die Veränderung des Innendrucks im Gehäuse ergänzend oder ausschließlich durch eine gezielte Temperierung, insbesondere Temperaturerhöhung, des Lösungsmittels und/oder des gelösten Kunststoff enthaltenden Lösungsmittels durchgeführt wird. Die Manipulation des Innendrucks kann auch rein durch oder in Kombination mit der Inertisierungs-Einrichtung erfolgen, so dass diese als besagter Verdichter ausgebildet ist oder mit einem solchen kombiniert sein kann.

Im Rahmen der vorgestellten Erfindung wird es als überaus vorteilhaft angesehen, wenn die erfindungsgemäße Zentrifuge in einer Abfall-Trennanlage Verwendung findet. Hierin kann sie in besonders bevorzugter Weise nach den Maßnahmen des erfindungsgemäßen Verfahrens betrieben werden, um wenigstens einen Feststoff aus einer den Feststoff sowie eine Polymerlösung mit zumindest einem Lösungsmittel und mindestens einem darin gelösten Kunststoff umfassenden Suspension, wie etwa Abfallsuspension, abzutrennen.

### Figuren Kurzbeschreibung

**Fig. 1** zeigt eine Seitenansicht einer Abfall-Trennanlage, und
**Fig. 2** zeigt einen Schnitt durch die Abfall-Trennanlage aus **Fig.** 1.

### Detaillierte Beschreibung eines Ausführungsbeispiels

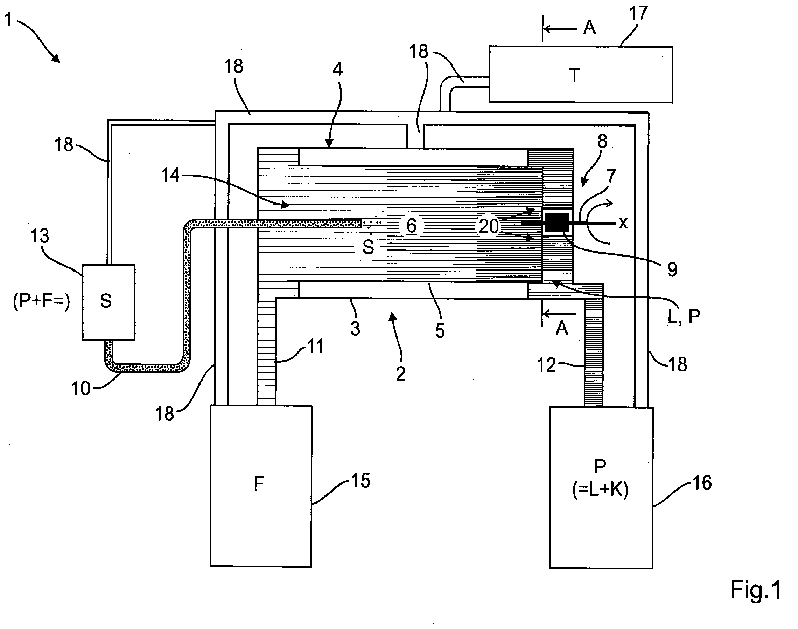

**Fig. 1** zeigt eine Seitenansicht einer Abfall-Trennanlage 1 mit einer erfindungsgemäßen Zentrifuge 1. Die Abfall-Trennanlage 1 ist dazu vorgesehen, in hier nicht näher dargestelltem Abfall enthaltenen Feststoff F von ebenfalls darin enthaltenen Kunststoff K zu trennen. Hierzu wird der Abfall zunächst in wenigstens ein Lösungsmittel L eingelegt, welches dazu eingerichtet ist, den wenigstens einen Kunststoff K aus dem Abfall herauszulösen. Dies erfolgt dadurch, dass der Kunststoff K innerhalb des Lösungsmittels L in Lösung geht und zusammen mit diesem eine Polymerlösung P bildet. Ausgangsbasis zur Beschickung der Zentrifuge 2 ist insofern eine zuvor angelegte Suspension S bzw. Abfallsuspension, welche den wenigstens einen Feststoff F sowie die Polymerlösung P mit Lösungsmittel L und darin gelöstem Kunststoff K aufweist.

Mit Blick auf **Fig. 1** weist die Zentrifuge 2 ein gasdichtes Gehäuse 3 auf, innerhalb dem ein Dreheinsatz 4 um eine Drehachse x herum rotierbar gelagert ist. In der hier gezeigten Ausführungsform ist der Dreheinsatz 4 zylindrisch ausgebildet, wobei er eine hohlzylindrische Mantelfläche 5 besitzt, welche einen Zentrifugiergutraum 6 der Zentrifuge 2 begrenzt. Der insofern rotierbare Dreheinsatz 4 ist mit einer antreibbaren Welle 7 drehmomentübertragend gekoppelt, wobei die das gasdichte Gehäuse 3 an zumindest einer Stelle 8 durchdringende Welle 7 durch ein Dichtungsorgan 9 gasdicht abgedichtet ist. Besagtes Dichtungsorgan 9 kann beispielsweise als Gleitringdichtung, Radialwellendichtung oder Stopfbuchse ausgebildet sein. Alternativ hierzu kann das Dichtungsorgan 9 zumindest eine der zuvor genannten Ausführungen umfassen.

Das Gehäuse 3 besitzt einen Einlauf 10 sowie vorliegend insgesamt zwei Ausläufe 11, 12. Der Einlauf 10 stellt eine fluidleitende Verbindung zwischen einem der Zentrifuge 2 vorgelagerten Vorlagebehälter 13 für die Suspension S und dem Zentrifugiergutraum 6 des Dreheinsatzes 4 her. Der Dreheinsatz 4 weist hierfür eine stirnseitige Öffnung 14 auf, über welche er mit dem Einlauf 10 des Gehäuses 3 verbunden ist. Vorliegend ragt das im Inneren der Zentrifuge 2 befindliche Ende des Einlaufs 10 durch eine dem Dichtungsorgan 9 gegenüberliegende Wandung des Gehäuses 3 hindurch und über die stirnseitige Öffnung 14 zumindest teilweise in den Zentrifugiergutraum 6 des Dreheinsatzes 4 hinein. Das Ende des Einlaufs 10 befindet sich hier beispielsweise - in Bezug auf die vorgesehene Strömungsrichtung der Suspension S - hinter der Ebene eines ersten Auslaufs 11 der beiden Ausläufe 11, 12.

Außerhalb des Gehäuses 3 der Zentrifuge 2 sind zwei voneinander getrennte gasdichte Behälter 15, 16 angeordnet, welcher über die beiden Ausläufe 11, 12 gasdicht mit dem Gehäuse 3 verbunden sind. Dabei ist ein erster Behälter 15 über den ersten Auslauf 11 und ein zweiter Behälter 16 über einen zweiten Auslauf 12 gasdicht mit dem Gehäuse 3 verbunden. Weiterhin außerhalb des Gehäuses 3 der Zentrifuge 2 ist eine Inertgas T enthaltende Inertisierungs-Einrichtung 17 gelegen, welche über fluidleitende Verbindungsleitungen 18 sowohl mit dem Gehäuse 3 als auch mit den beiden Behältern 15, 16 und dem Vorlagebehälter 13 gasdicht verbunden ist. Durch die Verbindungsleitungen 18 bilden die vorgenannten Komponenten allesamt ein gasdichtes System.

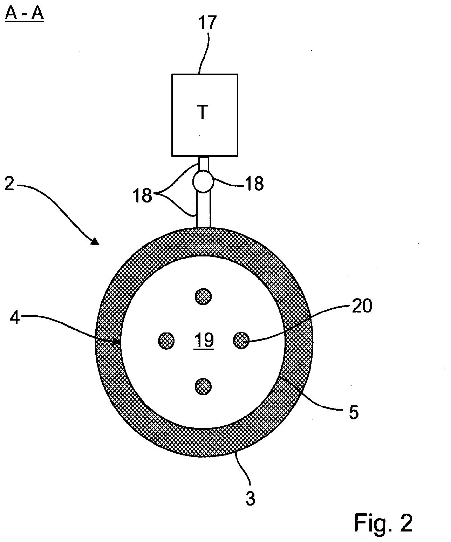

**Fig. 2** zeigt einen Schnitt durch die Zentrifuge 2 aus **Fig. 1** im Bereich des hier nicht näher dargestellten Dichtungsorgans 9. Der Blick ist vorliegend auf eine der stirnseitigen Öffnung 14 gegenüberliegende Rückwand 19 des Dreheinsatzes 4 gerichtet, welche aufgrund der hohlzylindrischen Mantelfläche 5 des zylindrischen Dreheinsatzes 4 ersichtlich eine kreisrunde Form besitzt. Wie zu erkennen, weist die Rückwand 19 des Dreheinsatzes 4 mehrere Durchgangsöffnungen 20 auf, durch welche sich eine Durchlässigkeit für die Suspension S mit Ausnahme des darin befindlichen Feststoffs F ergibt. Auf diese Weise sind die Durchgangsöffnungen 20 des Dreheinsatzes 4 vom Zentrifugiergutraum 6 aus mit Lösungsmittel L und/oder Polymerlösung P durchströmbar. Selbstverständlich können die Durchgangsöffnungen 20 auch oder alternativ in der Mantelfläche 5 des zylindrischen Dreheinsatzes 4 angeordnet sein, wo sie eine Art umfangsseitige Filterfunktion ausbilden.

Mit nochmaligem Bezug auf **Fig. 1** ist das den Dreheinsatz 4 umschließende gasdichte Gehäuse 3 derart um diesen herum ausgebildet, dass im Betrieb die aus dem Vorlagebehälter 13 über den Einlauf 10 in den Zentrifugiergutraum 6 gelangende Suspension S aus Polymerlösung P (also Lösungsmittel L sowie darin gelöster Kunststoff K) und Feststoff F gasdicht innerhalb des Gehäuses 3 zentrifugiert wird. Hierzu wird der Dreheinsatz 4 kontinuierlich über seine Durchgangsöffnungen 20 mit Lösungsmittel L und/oder Polymerlösung P durchströmt, während der in der Suspension S enthaltene Feststoff F zurückgehalten wird. Ursächlich hierfür ist primär die gleichzeitige Rotation des Dreheinsatzes 4, durch welche ein Zentrifugalfeld innerhalb der Zentrifuge 2 erzeugt wird. Hierdurch scheidet sich der Feststoff F in nicht näher dargestellter Weise auf der Mantelfläche 5 im Inneren des Dreheinsatzes 4 ab, während die leichteren Anteile der Suspension S (in Form von Lösungsmittel S und/oder Polymerlösung P) innerhalb des Dreheinsatzes 4 geklärt werden. Lösungsmittel S und/oder Polymerlösung P passieren das Zentrifugalfeld und werden letztlich über den zweiten Auslauf 12 bevorzugt kontinuierlich in den zweiten Behälter 16 ausgeleitet. Der so auszentrifugierte Feststoff F wird auf geeignete Weise, beispielsweise über eine nicht näher gezeigte Fördervorrichtung (z.B. Schnecke) entgegen der Strömungsrichtung zum ersten Auslauf 11 hin befördert, über den er bevorzugt kontinuierlich in den ersten Behälter 15 gelangt.

Der erste Behälter 15 kann einen hier nicht näher gezeigten Zulauf besitzen, über den eine Flüssigkeit wie beispielsweise Wasser (H₂O) und/oder wenigstens ein weiteres Lösungsmittel eingeleitet werden kann. Hierdurch ist der in den ersten Behälter 15 hinein abgeschiedene Feststoff F resuspendierbar, um dessen weitere Verarbeitung zu erleichtern und/oder zu ermöglichen. Dabei kann eine ebenfalls nicht weiter dargestellte Schleuse genutzt werden, um den auszentrifugierten Feststoff F bereits aus dem Gehäuse 3 oder erst aus dem ersten Behälter 15 des gasdichten Systems heraus zu entnehmen. Die Entnahme kann entweder kontinuierlich oder nur zweitweise erfolgen.

Die Inertisierungs-Einrichtung 17 dient der bedarfsweisen sowie gezielten Zufuhr des Inertgases T in das gasdichte System hinein, um einen Anteil an darin befindlichen Sauerstoffs insbesondere innerhalb des Gehäuses (aber auch im gesamten System) zumindest teilweise zu verdrängen. Gleichzeitig lässt sich hierdurch ein Innendruck insbesondere innerhalb des Gehäuses 3 (aber auch im gesamten System) über den atmosphärischen Druck hinaus erhöhen. Auf diese Weise kann die zu zentrifugierende Suspension und insbesondere das darin befindliche Lösungsmittel L auf eine Temperatur über dessen Siedetemperatur hinaus überhitzt werden, um beispielsweise dessen Reaktionsfreudigkeit hinsichtlich der lösenden Wirkung auf den Kunststoff K zu erhöhen oder erst zu aktivieren. Durch die Erhöhung des Innendrucks auf einen Wert, welcher bevorzugt oberhalb des Dampfdrucks des Lösungsmittels L liegt, ist ein Verdampfen des Lösungsmittels ausgeschlossen.

Die Manipulation des Innendrucks wird über die Inertisierungs-Einrichtung 17 in Kombination mit einem hier nicht gezeigten Verdichter erfolgen.

### Bezugszeichenliste

- 1: Abfall-Trennanlage
- 2: Zentrifuge
- 3: Gehäuse
- 4: Dreheinsatz
- 5: Mantelfläche
- 6: Zentrifugiergutraum
- 7: Welle
- 8: Stelle
- 9: Dichtungsanordnung
- 10: Einlauf
- 11: erster Auslauf
- 12: zweiter Auslauf
- 13: Vorlagebehälter
- 14: stirnseitige Öffnung
- 15: erster Behälter
- 16: zweiter Behälter
- 17: Inertisierungs-Einrichtung
- 18: Verbindungsleitung
- 19: Rückwand
- 20: Durchgangsöffnung

- A: Schnitt
- F: Feststoff
- K: Kunststoff
- L: Lösungsmittel
- P: Polymerlösung
- S: Suspension
- T: Inertgas
- x: Drehachse

## Patentansprüche

1. Zentrifuge zur Abtrennung wenigstens eines Feststoffs (F) aus einer Suspension (S), insbesondere Abfallsuspension, welche den Feststoff (F) sowie eine Polymerlösung (P) mit zumindest einem Lösungsmittel (L) und wenigstens einem darin gelösten Kunststoff (K) umfasst, aufweisend ein Gehäuse (3) mit einem darin rotierbar gelagerten Dreheinsatz (4), umfassend eine den Dreheinsatz (4) umschließende Ausbildung des Gehäuses (3) derart, dass die Suspension (S) gasdicht innerhalb des Gehäuses (3) zentrifugierbar ist, **gekennzeichnet durch** eine Inertisierungs-Einrichtung (17), welche dazu ausgebildet und angeordnet ist, einen Innendruck mindestens auf einen Wert für einen Dampfdruck des Lösungsmittels (L) zu erhöhen, und durch einen mit dem Gehäuse (3) verbundenen Verdichter, welcher dazu ausgebildet ist, einen Innendruck innerhalb des Gehäuses (3) zu manipulieren.

2. Zentrifuge nach Anspruch 1, **dadurch gekennzeichnet, dass** das Gehäuse (3) einen Einlauf (10) sowie wenigstens einen Auslauf (11, 12) besitzt, welche dazu vorgesehen sind, Suspension (S) einzuleiten sowie Polymerlösung (P) und/oder auszentrifugierten Feststoff (F) auszuleiten.

3. Zentrifuge nach Anspruch 1 oder 2, **dadurch gekennzeichnet, dass** der Dreheinsatz (4) zumindest zeitweise mit Lösungsmittel (L) und/oder Polymerlösung (P) durchströmbar ist.

4. Zentrifuge nach einem der Ansprüche 1 bis 3, **dadurch gekennzeichnet, dass** der Dreheinsatz (4) eine wenigstens bereichsweise mit Durchgangsöffnungen (20) ausgestattete, insbesondere hohlzylindrische, Mantelfläche (5) aufweist, welche einen Zentrifugiergutraum (6) begrenzt, wobei die Durchgangsöffnungen (20) des Dreheinsatzes (4) vom Zentrifugiergutraum (6) aus mit Lösungsmittel (L) und/oder Polymerlösung (P) durchströmbar sind.

5. Zentrifuge nach einem der Ansprüche 1 bis 4, **dadurch gekennzeichnet, dass** die Inertisierungs-Einrichtung (17) dazu ausgebildet und angeordnet ist, einen Anteil an Sauerstoff innerhalb des Gehäuses (3) zumindest teilweise zu verdrängen.

6. Zentrifuge nach einem der Ansprüche 2 bis 5, **dadurch gekennzeichnet, dass** der Dreheinsatz (4) über eine stirnseitige Öffnung (14) mit dem Einlauf (10) oder dem Auslauf (11, 12) des Gehäuses (3) verbunden ist.

7. Zentrifuge nach einem der Ansprüche 1 bis 6, **dadurch gekennzeichnet, dass** der rotierbare Dreheinsatz (4) mit einer antreibbaren Welle (7) drehmomentübertragend gekoppelt ist, wobei die das Gehäuse (3) zumindest an einer Stelle (8) durchdringende Welle (7) durch eine Dichtungsanordnung (9) gasdicht abgedichtet ist; wobei vorzugsweise: die Dichtungsanordnung (9) als Gleitringdichtung, Radialwellendichtung oder Stopfbuchse ausgebildet ist oder zumindest eine der genannten Ausführungen umfasst.

8. Zentrifuge nach einem der Ansprüche 1 bis 7, **gekennzeichnet durch** einen mit dem Gehäuse (3) verbundenen gasdichten Behälter (15), in den der aus der Suspension (S) auszentrifugierte Feststoff (F) kontinuierlich überführbar ist; wobei vorzugsweise: der gasdichte Behälter (15) einen Zulauf besitzt, wobei der in den gasdichten Behälter (15) überführte Feststoff (F) durch die Zugabe von Wasser und/oder ein Lösungsmittel über den Zulauf resuspendierbar ist.

9. Zentrifuge nach einem der Ansprüche 1 bis 8, **gekennzeichnet durch** eine gasdichte Schleuse, durch welche hindurch der auszentrifugierte Feststoff (F) aus dem Gehäuse (3) oder dem gasdichten Behälter (15) heraus entnehmbar ist.

10. Verfahren zum Abtrennen wenigstens eines Feststoffs (F) aus einer Suspension (S), wie etwa einer Abfallsuspension, mit einer Zentrifuge (2), insbesondere nach einem der Ansprüche 1 bis 9, wobei die den Feststoff (F) sowie eine Polymerlösung (P) mit zumindest einem Lösungsmittel (L) und mindestens einem darin gelösten Kunststoff (K) umfassende Suspension (S) in einen Bereich eines rotierbaren Dreheinsatzes (4) der Zentrifuge (2) überführt wird, wobei die Suspension (S) innerhalb eines den Dreheinsatz (4) gasdicht umschließenden Gehäuses (3) der Zentrifuge (2) zentrifugiert wird, **dadurch gekennzeichnet, dass** ein Innendruck mindestens auf einen Wert für einen Dampfdruck des Lösungsmittels (L) erhöht wird und ein Innendruck innerhalb des Gehäuses (3) durch einen Verdichter manipuliert wird.

11. Verfahren nach Anspruch 10, **dadurch gekennzeichnet, dass** der Dreheinsatz (4) zumindest zeitweise mit Lösungsmittel (L) und/oder Polymerlösung (P) durchströmt wird.

12. Verfahren nach Anspruch 10 oder 11, **dadurch gekennzeichnet, dass** der Dreheinsatz (4) eine wenigstens bereichsweise mit Durchgangsöffnungen (20) ausgestattete, insbesondere hohlzylindrische, Mantelfläche (5) aufweist, welche einen Zentrifugiergutraum (6) begrenzt, wobei die Durchgangsöffnungen (20) des Dreheinsatzes (4) vom Zentrifugiergutraum (6) aus mit Lösungsmittel (L) und/oder Polymerlösung (P) durchströmt werden.

13. Verfahren nach einem der Ansprüche 10 bis 12, **dadurch gekennzeichnet, dass** ein Anteil an Sauerstoff innerhalb des Gehäuses (3) zumindest teilweise durch das Einleiten von Inertgas (T) verdrängt wird

14. Verfahren nach einem der Ansprüche 10 bis 13, **dadurch gekennzeichnet, dass** der aus der Suspension (S) auszentrifugierte Feststoff (F) in einen mit dem Gehäuse (3) verbundenen gasdichten Behälter (15) kontinuierlich überführt wird; wobei vorzugsweise: der in den Behälter (15) überführte Feststoff (F) durch die Zugabe von Wasser und/oder einem Lösungsmittel über einen Zulauf des Behälters (15) innerhalb diesem resuspendiert wird.

15. Verwendung einer Zentrifuge (2) nach einem der Ansprüche 1 bis 9 in einer Abfall-Trennanlage (1), insbesondere für ein Verfahren zum Abtrennen wenigstens eines Feststoffs (F) aus einer den Feststoff (F) sowie eine Polymerlösung (P) mit zumindest einem Lösungsmittel (L) und mindestens einem darin gelösten Kunststoff (K) umfassenden Suspension (S), wie etwa Abfallsuspension, nach einem der Ansprüche 10 bis 14.

## Claims

1. A centrifuge for separating at least one solid material (F) out of a suspension (S), in particular a waste suspension, comprising the solid matter (F) as well as a polymer solution (P) with at least one solvent (L) and at least one plastic (K) dissolved therein, having a housing (3) with a rotary insert (4) rotatably mounted therein, comprising a formation of the housing (3) enclosing the rotary insert (4) such that the suspension (S) can be centrifuged within the housing (3) in a gas-tight manner, **characterized by** an inertization device (17) designed and arranged for increasing an inner pressure at least to a value for a vapor pressure of the solvent (L), and **characterized by** a condenser connected to the housing (3), which is designed for manipulating an inner pressure within the housing (3).

2. The centrifuge according to claim 1, **characterized in that** the housing (3) possesses an inlet (10) as well as at least one outlet (11, 12) which are provided for feeding in suspension (S) as well as feeding out polymer solution (P) and/or solid matter (F) that has been centrifuged out.

3. The centrifuge according to claim 1 or 2, **characterized in that** solvent (L) and/or polymer solution (P) can flow through the rotary insert (4), at least at times.

4. The centrifuge according to any of claims 1 to 3, **characterized in that** the rotary insert (4) has a jacket surface (5), in particular hollow-cylindrical, which is equipped at least in regions with through-openings (20), which jacket surface (5) delimits a centrifugation-matter space (6), wherein solvent (L) and/or polymer solution (P) can flow through the through-openings (20) of the rotary insert (4) from the centrifugation-matter space (6).

5. The centrifuge according to any of claims 1 to 4, **characterized in that** the inertization device (17) is designed and arranged for at least partially displacing a portion of oxygen within the housing (3).

6. The centrifuge according to any of claims 2 to 5, **characterized in that** the rotary insert (4) is connected to the inlet (10) or the outlet (11, 12) of the housing (3) by a face-side opening (14).

7. The centrifuge according to any of claims 1 to 6, **characterized in that** the rotatable rotary insert (4) is coupled in a torque-transmitting manner to a drivable shaft (7), wherein the shaft (7) extending through the housing (3) is sealed so as to be gas-tight at least at one place (8) by a sealing arrangement (9); wherein preferably the sealing arrangement (9) is designed as a mechanical seal, radial shaft seal or packing gland, or at least comprises one of the aforementioned embodiments.

8. The centrifuge according to any of claims 1 to 7, **characterized by** a gas-tight container (15) connected to the housing (3) into which the solid matter (F) centrifuged out of the suspension (S) can be continually transferred; wherein preferably: the gas-tight container (15) has an intake, wherein the solid matter (F) transferred into the gas-tight container (15) can be resuspended by adding water and/or a solvent via the intake.

9. The centrifuge according to any of claims 1 to 8, **characterized by** a gas-tight gate through which the centrifuged-out solid matter (F) can be removed from the housing (3) or the gas-tight container (15).

10. A method for separating at least one solid matter (F) from a suspension (S), such as a waste suspension, with a centrifuge (2), in particular according to any of claims 1 to 9, wherein the suspension (S) comprising the solid matter (F) as well as a polymer solution (P) with at least one solvent (L) and at least one plastic (K) dissolved therein is transferred into a region of a rotatable rotary insert (4) of the centrifuge (2), wherein the suspension (S) is centrifuged within a housing (3) of the centrifuge (2) enclosing the rotary insert (4) in a gas-tight manner, **characterized in that** an inner pressure is increased at least to a value for a vapor pressure of the solvent (L) and an inner pressure is manipulated inside the housing (3) by a condenser.

11. The method according to claim 10, **characterized in that** solvent (L) and/or polymer solution (P) can flow through the rotary insert (4), at least at times.

12. The method according to claim 10 or 11, **characterized in that** the rotary insert (4) has a jacket surface (5), in particular hollow-cylindrical, which is equipped at least in regions with through-openings (20), which jacket surface (5) delimits a centrifugation-matter space (6), wherein solvent (L) and/or polymer solution (P) can flow through the through-openings (20) of the rotary insert (4) from the centrifugation-matter-space (6).

13. The method according to any of claims 10 to 12, **characterized in that** a portion of oxygen is at least partially displaced within the housing (3) by feeding in inert gas (T).

14. The method according to any of claims 10 to 13, **characterized in that** solid matter (F) centrifuged out of the suspension (S) is continually transferred into a gas-tight container (15) connected to the housing (3), wherein preferably: the solid matter (F) transferred into the container (15) is resuspended therein by adding water and/or a solvent via an intake of the container (15).

15. A use of a centrifuge (2) according to any of claims 1 to 9 in a waste separation plant (1), in particular for a method according to any of claims 10 to 14 for separating at least one solid matter (F) from a suspension (S) comprising the solid matter (F) as well as a polymer solution (P) with at least one solvent (L) and at least one plastic (K) dissolved therein, for example a waste suspension.

## Revendications

1. Centrifugeuse destinée à séparer au moins d'une matière solide (F) d'une suspension (S), en particulier d'une suspension de déchets, comprenant la matière solide (F) ainsi qu'une solution de polymère (P) avec au moins un solvant (L) et au moins une matière plastique (K) dissoute dans celle-ci, présentant un boîtier (3) avec un insert rotatif (4) logé de manière à pouvoir tourner dans ce boîtier, comprenant une réalisation du boîtier (3) entourant l'insert rotatif (4) de manière à ce que la suspension (S) puisse être centrifugée de manière étanche aux gaz à l'intérieur du boîtier (3), **caractérisée par** un dispositif d'inertisation (17) conçu et agencé pour augmenter une pression interne au moins à une valeur pour une pression de vapeur du solvant (L), et par un compresseur relié au boîtier (3) conçu pour manipuler une pression interne à l'intérieur du boîtier (3).

2. Centrifugeuse selon la revendication 1, **caractérisée en ce que** le boîtier (3) possède une entrée (10) ainsi qu'au moins une sortie (11, 12), qui sont prévues pour introduire une suspension (S) ainsi que pour évacuer une solution de polymère (P) et/ou une matière solide (F) centrifugée.

3. Centrifugeuse selon la revendication 1 ou 2, **caractérisée en ce que** l'insert rotatif (4) peut être traversé au moins temporairement par un solvant (L) et/ou une solution de polymère (P).

4. Centrifugeuse selon l'une des revendications 1 à 3, **caractérisée en ce que** l'insert rotatif (4) présente une surface d'enveloppe (5), en particulier cylindrique creuse, équipée au moins par endroits d'ouvertures de passage (20), qui délimite une chambre de produit à centrifuger (6), les ouvertures de passage (20) de l'insert rotatif (4) pouvant être traversées par un solvant (L) et/ou une solution de polymère (P) depuis la chambre de produit à centrifuger (6).

5. Centrifugeuse selon l'une des revendications 1 à 4, **caractérisée en ce que** le dispositif d'inertisation (17) est conçu et agencé pour déplacer au moins partiellement une fraction d'oxygène à l'intérieur du boîtier (3).

6. Centrifugeuse selon l'une des revendications 2 à 5, **caractérisée en ce que** l'insert rotatif (4) est relié à l'entrée (10) ou à la sortie (11, 12) du boîtier (3) par une ouverture frontale (14).

7. Centrifugeuse selon l'une des revendications 1 à 6, **caractérisée en ce que** l'insert rotatif (4) est couplé de manière à transmettre le couple à un arbre (7) pouvant être entraîné, l'arbre (7) traversant le boîtier (3) étant étanchéifié de manière étanche aux gaz par un dispositif d'étanchéité (9) au moins en un point (8); de préférence : le dispositif d'étanchéité (9) étant réalisé sous la forme d'une garniture mécanique, d'un joint d'arbre radial ou d'un presse-étoupe ou comprenant au moins l'un des modèles mentionnés.

8. Centrifugeuse selon l'une des revendications 1 à 7, **caractérisée par** un récipient étanche aux gaz (15), relié au boîtier (3), dans lequel la matière solide (F) extraite par centrifugation de la suspension (S) peut être transférée en continu ; de préférence : le récipient étanche aux gaz (15) possédant une arrivée, la matière solide (F) transférée dans le récipient étanche aux gaz (15) pouvant être remise en suspension par l'ajout d'eau et/ou d'un solvant via l'arrivée.

9. Centrifugeuse selon l'une des revendications 1 à 8, **caractérisée par** un sas étanche aux gaz à travers lequel la matière solide (F) centrifugée peut être retirée du boîtier (3) ou du récipient étanche aux gaz (15).

10. Procédé de séparation d'au moins une matière solide (F) d'une suspension (S), telle qu'une suspension de déchets, au moyen d'une centrifugeuse (2), en particulier selon l'une des revendications 1 à 9, dans lequel la suspension (S) comprenant la matière solide (F) ainsi qu'une solution de polymère (P) avec au moins un solvant (L) et au moins une matière plastique (K) dissoute dans celle-ci est transférée dans une zone d'un insert rotatif (4) de la centrifugeuse (2), la suspension (S) étant centrifugée à l'intérieur d'un boîtier (3) de la centrifugeuse (2) entourant l'insert rotatif (4) de manière étanche aux gaz, **caractérisé en ce qu'**une pression interne est augmentée au moins à une valeur pour une pression de vapeur du solvant (L) et une pression interne à l'intérieur du boîtier (3) est manipulée par un compresseur.

11. Procédé selon la revendication 10, **caractérisé en ce que** l'insert rotatif (4) est traversé au moins temporairement par un solvant (L) et/ou une solution de polymère (P).

12. Procédé selon la revendication 10 ou 11, **caractérisé en ce que** l'insert rotatif (4) présente une surface d'enveloppe (5), en particulier cylindrique creuse, équipée au moins par endroits d'ouvertures de passage (20), qui délimite une chambre de produit à centrifuger (6), les ouvertures de passage (20) de l'insert rotatif (4) étant traversées par un solvant (L) et/ou une solution de polymère (P) depuis la chambre de produit à centrifuger (6).

13. Procédé selon l'une des revendications 10 à 12, **caractérisé en ce qu'**une proportion d'oxygène à l'intérieur du boîtier (3) est au moins partiellement déplacée par l'introduction de gaz inerte (T).

14. Procédé selon l'une des revendications 10 à 13, **caractérisé en ce que** la matière solide (F) extraite par centrifugation de la suspension (S) est transférée en continu dans un récipient étanche aux gaz (15) et relié au boîtier (3); de préférence: la matière solide (F) transférée dans le récipient (15) étant remise en suspension à l'intérieur de celui-ci par l'ajout d'eau et/ou d'un solvant via une arrivée du récipient (15).

15. Utilisation d'une centrifugeuse (2) selon l'une des revendications 1 à 9 dans une installation de séparation de déchets (1), notamment pour un procédé de séparation d'au moins une matière solide (F) à partir d'une suspension (S) comprenant la matière solide (F) ainsi qu'une solution de polymère (P) avec au moins un solvant (L) et au moins une matière plastique (K) qui y est dissoute, telle qu'une suspension de déchets, selon l'une des revendications 10 à 14.
